# EUROPEAN PATENT SPECIFICATION

(11) **EP 2 832 708 B1**
(45) Date of publication and mention of the grant of the patent: **05.07.2017**
(21) Application number: 13768511.1
(22) Date of filing: 13.03.2013
(51) Int. Cl.: C04B 35/64, C04B 35/66

(54) **METHOD FOR THE PRODUCTION OF MONOLITHIC CARBONACEOUS OR CERAMIC SYSTEMS**
VERFAHREN ZUR HERSTELLUNG VON MONOLITHISCHEN, KOHLENSTOFFHALTIGEN ODER KERAMISCHEN SYSTEMEN
PROCÉDÉ DE FABRICATION DE SYSTÈMES MONOLITHIQUES DE TYPE CÉRAMIQUE OU CARBONÉ

(30) Priority: 30.03.2012 ES 201230489
(43) Date of publication of application: 04.02.2015
(73) Proprietor: Asociación De Investigación De La Industria Del Juguete, Conexas Y Afines, 03440 Ibi (ES)
(72) Inventor: CARRATALÁ ABRIL, Juan, E-03440 Ibi (ES); REY MARTÍNEZ, Lorena, E-03440 Ibi (ES); BENEITO RUIZ, Rubén, E-03440 Ibi (ES); VILAPLANA CERDÁ, Joaquín, E-03440 Ibi (ES); SANDOVAL PÉREZ, Ignacio, E-03440 Ibi (ES); CARRIÓN ROSILLO, César, E-03440 Ibi (ES); SÁNCHEZ RECHE, Ana, E-03440 Ibi (ES)
(74) Representative: Oficina Ponti, SLP
(86) International application number: PCT/ES2013/070160
(87) International publication number: WO 2013/144399

(56) References cited:
- WO-A1-93/19019
- US-A- 5 284 695
- US-A1- 2008 008 894
- KAUSHIK ALAYAVALLI ET AL: "Fabrication of Electrically Conductive, Fluid Impermeable Direct Methanol Fuel Cell (DMFC) Graphite Bipolar Plates by Indirect Selective Laser Sintering (SLS)", NINETEENTH INTERNATIONAL SOLID FREEFORM FABRICATION SYMPOSIUM, 1 January 2008 (2008-01-01), XP055171506,
- KHURAM SHAHZAD ET AL: "Preparation and indirect selective laser sintering of alumina/PA microspheres", CERAMICS INTERNATIONAL, ELSEVIER, AMSTERDAM, NL, vol. 38, no. 2, 23 August 2011 (2011-08-23), pages 1241-1247, XP028341404, ISSN: 0272-8842, DOI: 10.1016/J.CERAMINT.2011.08.055 [retrieved on 2011-09-02]
- KRUTH J P ET AL: "Lasers and materials in selective laser sintering", ASSEMBLY AUTOMATION, BRADFORD, GB, vol. 23, no. 4, 1 January 2003 (2003-01-01), pages 357-371, XP003025898,
- VERGUNST T ET AL: "Preparation of carbon-coated monolithic supports", CARBON, ELSEVIER, OXFORD, GB, vol. 40, no. 11, 1 September 2002 (2002-09-01), pages 1891-1902, XP004371639, ISSN: 0008-6223, DOI: 10.1016/S0008-6223(02)00034-9
- KHURAM SHAHZAD ET AL.: 'Preparation indirect Selective laser sintering of alumina/PA microspheres' CERAMICS INTERNATIONAL vol. 38, 02 September 2011, pages 1241 - 1247, XP028341404
- ALAYAVALLI, KAUSHIK ET AL.: 'Fabrication of Electrically Conductive, Fluid Impermeable Direct Methanol Fuel Cell (DMFC) Graphite Bipolar Platesby Indirect Selective Laser Sintering (SLS)' NINETEENTH INTERNATIONAL SOLID FREEFORM FABRICATION SYMPOSIUM 2008, AUSTIN, TEXAS, pages 186 - 193, XP055171506

## Description

The present invention relates to a procedure for the fabrication of monolithic systems of ceramic or carbonaceous nature which uses the Selective Laser Sintering (SLS) technique.

The invention also relates to the use of the monolithic systems obtained with the procedure according to the present invention for diverse applications such as: catalyst support for the chemical industry, adsorbents for the removal of contaminants or odours, or distributers / diffusers of fluids (gases or liquids) in reactors or particle filters.

### Background of the invention

In the state of the art there are monolithic systems from materials of different nature and with well-defined geometry that are used in the chemical industry for various applications such as: substrates and supports of active phases for catalysts, adsorbent systems, particle filters, etc. The most important monolithic systems are those which have a honeycomb geometry. The "honeycomb" monoliths have a structure wherein are situated, in regular and uniform form, channels that are parallel to one another which may have different geometries such as square, triangular, hexagonal, etc. and different sizes (0.7-4 mm diameter). The "honeycomb" monolithic systems have considerable advantages compared with the systems based on beds of particles or granules, especially when they are used in systems which work with large volumes or high flow of effluents, such as low pressure drop, the efficient heat and mass transfer, large geometrical surface area and high density.

The forming process of these monoliths usually uses conventional techniques such as extrusion, for which reason it is necessary that the ceramics or carbonaceous materials they are formed of are previously mixed with different additives such as plasticizers, binders, dispersants and lubricants with the aim of forming pastes with the rheological and plastic properties suitable for their forming. Obtaining a suitable formulation of the mixtures of materials is not trivial and usually involves a prior study on a laboratory scale which is often tedious. Furthermore, the use of all these additives entails an additional cost which makes the material forming process more expensive.

After the material forming process by extrusion additional thermal treatments are carried out to remove and decompose the solvents and additives used during preparation of the extrudable pastes. Furthermore, the composition of the formed base material may be altered by the presence of the additive decomposition products, mainly metal oxides, since they cannot always be removed from the material matrix.

Thus, for example, in the case of monolithic materials of ceramic nature, it is generally necessary to perform an activation with the aim of generating the necessary roughness or porosity for the deposit of active phases of other materials such as metal catalysts or the deposit of materials with adsorbent properties such as activated carbons, zeolites, etc., see for example, Th. Vergunst et al. in "Preparation of carbon-coated monolithic supports" in Carbon 40 (2002) 1891-1902. The formation of roughness in ceramics may be done in two manners: by acid activation or by thermal treatment.

In acid activation it is necessary to use acid solutions, typically HCl and H₂SO₄, which has a risk for the worker's health and an additional cost especially when they are used on an industrial level. Acid treatment, in addition to modifying the texture of the ceramic, may generate undesired changes in its structure. In thermal treatment, the monolithic material is subjected to heating in a controlled atmosphere to decompose certain additives called pore-generating agents which are introduced in the ceramic base material to obtain the desired porous structure. As pore generating agents, we can highlight carbon black, coal and activated carbon. The use of these carbonaceous additives for the generation of a porous structure in the formed ceramic monolith implies, therefore, an additional cost in the process.

In the current state of material forming technology there are Rapid Fabrication techniques, which include among them Selective Laser Sintering (SLS). Selective Laser Sintering is a Rapid Prototyping technique which makes it possible to obtain, in a short time and without human intervention, parts of great geometrical complexity from 3D models previously designed with computer software. The SLS technique is highly used in the development of preforms both in the ceramic field and with metals. During the sintering process, a CO₂ laser beam of micrometric precision is responsible, under the orders given by software, for melting or sintering the material in controlled form, plane by plane, drawing the geometrical form of the previously designed preform. Selective Laser Sintering has two variants: Direct and Indirect.

In Direct Selective Laser Sintering the material sintered is the starting base material, which must have a relatively low melting point which will depend on the nature of the material (polymeric material, metal).

In Indirect Selective Laser Sintering, hereinafter, "Indirect SLS", the sintering of the starting base material is carried out using the addition of sintering agents. These sintering agents are usually polymeric materials with a relatively low melting point so that when they melt they serve as bonding element of the starting base material. In Indirect SLS the choice of the sintering agent is critical in the success of the forming. Within the factors that intervene in the forming process by Indirect SLS is the wettability there is between the particles of base material and the melted sintering agent, the ratio of particle sizes between the starting base material and the sintering agent, the geometry of the material particles (uniform or irregular), the existing inter/intraparticle porosity of the material, the power and resolution of the laser, etc..

### Summarized description of the invention

The present invention provides a simple, fast and economical procedure for the preparation of monolithic systems of diverse geometrical complexity from ceramic or carbonaceous materials using the indirect Selective Laser Sintering technique.

The monolithic materials obtained by this procedure are suitable for various applications among which their use is highlighted as substrates or physical supports of materials with own functionality (metal catalysts, molecular sieves), as particle filters and as adsorbent systems for the elimination of contaminants of gaseous or liquid effluents.

The procedure according to the invention is further characterized in that it is respectful with the nature of the starting materials and does not require the addition of additives and solvents for their processing with the corresponding saving in costs and reduction of risks for the health of workers. The materials formed obtained according to the procedure of the invention have a high intrinsic porosity which is especially advantageous for the ceramic materials since it avoids the need to perform later activation treatments that use chemical methods or the incorporation of additional additives during processing for the formation of porosity.

Thus, a first aspect of the present invention is to provide a procedure for the fabrication of monolithic materials of carbonaceous or ceramic nature which uses the Indirect SLS technique.

In accordance with the first aspect, the invention provides a procedure for the fabrication of monolithic systems of ceramic or carbonaceous nature which is characterized in that it comprises the following stages:
i) preparing a dry homogeneous mixture with the ceramic or carbonaceous material which one wants to form and a phenol-formaldehyde resin, preferably a phenolic resin with a melting point less than 150ºC and with a content in volatile compounds less than 60% by weight with respect to said resin;

The ratio between the quantities of starting base material and resin to prepare the mixtures is comprised between 95/5 and 60/40 for ceramic materials, and between 90/10 and 10/90 for carbonaceous materials.

Both the starting base material to be formed and the resin have a particle size preferably less than 100 µm.

Next,
ii) in a laser sintering machine, sintering said homogeneous mixture prepared until forming a part or preform called "green body" with the desired geometry;
iii) next, removing the part, preform or "green body" from the sintering machine, cleaning it and performing a curing treatment at a temperature comprised between 150 and 300°C, preferably between 150 and 200°C, until completing the curing of the resin, so that a cured part, cured preform, also called cured green body, is obtained which has a mechanical resistance greater than that of the green body before the curing;
iv) performing a pyrolysis treatment of said cured green body in an inert atmosphere such as N₂, Argon, Helium or mixtures thereof, at a temperature comprised between 400 and 1,000°C until decomposing the resin, so that a pyrolized part, also called "brown body" is obtained which contains a carbon residue from pyrolysis of the resin, said pyrolysis treatment comprising alternate stages of isothermal heating and non-isothermal heating; and
v) finally, activating the brown body with a thermal treatment in a reactive atmosphere to eliminate the carbon residue, by-product of the pyrolysis, where said atmosphere and treatment are selected depending on the ceramic or carbonaceous starting base material as follows:
- for a ceramic starting base material:

| **Reagent gas** | **Temperature (°C)** |
|---|---|
| O₂, air or mixtures of O₂ and an inert gas | 450-900 |

- for a carbonaceous starting base material:

| **Reagent gas** | **Temperature (°C)** |
|---|---|
| O₂, air or mixtures of O₂ and an inert gas | 250-450 |
| CO₂ | 700-1,200 |
| Steam | 900-1,200 |

and, optionally, in the case that said starting base material is of ceramic nature:
vi) thermally treating the ceramic monolith at a temperature greater than 900ºC in a reactive atmosphere of oxygen, air or mixtures of oxygen and an inert gas such as N₂, Argon, Helium so that a densification takes place also known as ceramic sintering or a transformation of crystalline phases depending on the ceramic starting material.

The invention also relates, in a second aspect, to the formed monolithic systems or materials of ceramic or carbonaceous nature obtained with the procedure according to the first aspect of the invention for their use as support of metal catalysts such as, for example, alumina/Pd, zirconia/Rh, ceria/Pd, activated carbon/Ni, etc.., or as support of material films with a well defined porous texture and adsorbent properties such as those of molecular sieves such as, for example, cordierite/zeolite, alumina/carbonaceous molecular sieve, activated carbon/carbonaceous molecular sieve, etc.

### Description of figures

For a better understanding of the above, figures are attached wherein, schematically and only by way of non-limiting example, a practical case of the invention is represented.
Figure 1 shows different 3D designs of monolithic systems with honeycomb structures which have parallel symmetrical channels obtained with the forming procedure according to the present invention. The cross-section of these channels may have a circular, hexagonal, rectangular, triangular or sinusoidal form. The number of channels or cells per unit of surface area of the cross-section generally is comprises between 1-100 cells/cm² with wall thicknesses which vary between 0.2-1.4 mm depending on the final application.
Figure 2 shows two embodiments of monolithic systems obtained in accordance with the procedure of the present invention. It specifically relates to honeycomb monoliths obtained from a carbonaceous material, synthetic graphite and from a ceramic material, cordierite, respectively.

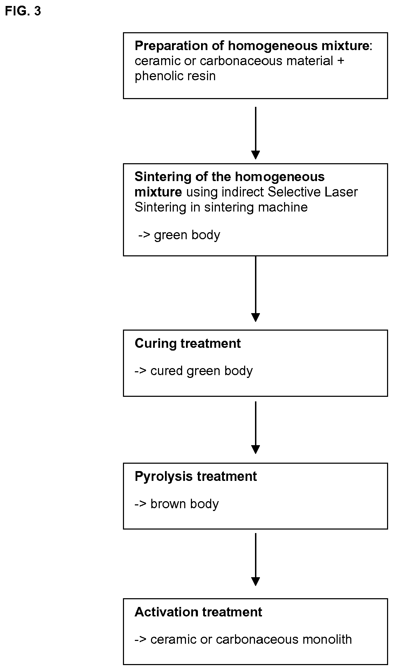

Figure 3 shows a flow diagram which schematizes the stages of the production procedure of the monolithic systems of ceramic or carbonaceous nature in accordance with the present invention. Said figure does not include the optional final stage specific for starting materials of ceramic nature.

### Definitions

In the present invention "phenolic resin" is understood to be a thermoplastic polymeric compound the polymeric chains whereof mainly comprise phenolic groups. Preferably, said phenolic resins have a melting point less than 150ºC and a content in volatile compounds less than 60% by weight with respect to the resin. "Volatile compounds" is understood as the products of gaseous decomposition given off from the material when it is subjected to heating in an inert atmosphere until high temperatures (900ºC). The phenolic resin in the presence of a curing agent and with heating above 150ºC is capable of suffering curing reactions between its polymeric chains to give rise to a rigid three-dimensional polymeric compound with great thermal and mechanical stability, i.e. a thermosetting polymer. As examples of phenolic resins it includes those from the family of novolacs or those from the family of resols, both included in the scope of protection of the present invention. As non-limiting examples of the invention, and only by way of providing phenolic resins with melting point less than 150ºC and specific volatile compounds content less than 60%, some commercially available resins are listed below: Manufacturer: Momentive Specialty Chemicals Inc., product reference: Durite AD 332 A; Manufacturer: Durez Corporation, product reference: 29217R; Manufacturer: Shandong Shengquan Chemical Co Ltd, product reference: PF-8001; Manufacturer: DIC Global, product reference: 4331 A. Likewise, specific cases of phenolic resins from the family of the NOVOLACS are listed below: Manufacturer: Momentive Specialty Chemicals Inc., reference: Durite AD 332 A; Manufacturer: Durez Corporation, product reference: 29217R; Manufacturer: Shandong Shengquan Chemical Co Ltd, product reference: PF-8001; Manufacturer: DIC Global, product reference: 4331 A.

"Curing agent" is understood to be an agent that promotes the cross-linking reactions of the polymeric chains of the phenolic resin due to heating and is formed by a formaldehyde precursor compound, normally hexamethylenetetramine, and traces of an acid/alkali as catalyst. The phenolic resins, due to their composition, are also known as phenol-formaldehyde resins. As phenolic resin a phenolic resin from the family of the novolacs (manufacturer "Georgia Pacific") is preferable.

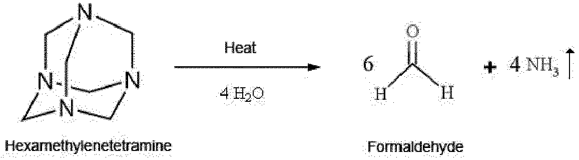

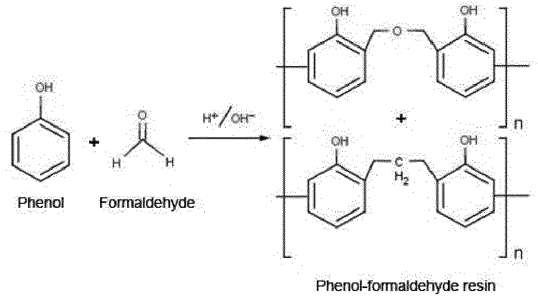

In the present invention "ceramic material" is understood as a material formed by metal oxides, clays or other organic compounds such as aluminosilicates, carbonates, sulfates, bicarbonates, etc. These materials have high chemical inertia and great thermal and mechanical resistance Examples of ceramic materials are the aluminas, zeolites, silicas, titanium dioxide, zirconia and cordierite. In some cases there may be certain porosity and a specific surface area comprised between 20-500 m²/g.

In the present invention "carbonaceous material" is understood as a material which has a majority carbon content, greater than 90%. Examples of carbonaceous materials are activated carbon, carbon black, carbon nanofibres, graphites, carbon nanotubes, graphenes, carbon nanofibres, etc. These materials have good properties of mechanical resistance, electrical conductivity or high specific surface area (of up to 3000 m²/g).

In the present invention "green body" is understood to be a part or preform obtained after the forming stage by SLS of a mixture of the carbonaceous or ceramic starting base material and a sintering agent.

In the present invention "brown body" is understood as a part or preform obtained after the pyrolysis treatment of the green body. This "brown body" is composed of the ceramic or carbonaceous starting material and by a carbonaceous residue from the decomposition of the sintering agent. A later thermal treatment has been performed on this "brown body" in reactive atmosphere for the elimination of said residue and obtaining in this way the desired final ceramic or carbonaceous monolith.

### Detailed description of the invention

In accordance with the first aspect of the invention, the procedure for the fabrication of ceramic or carbonaceous monolithic systems is characterized in that it uses a phenol-formaldehyde resin selected from the group consisting of a novolac resin or a resol resin, where preferably 95% of the particles of said resin have a particle size less than 75 µm, and where the ratio between the starting base material and said phenolic resin is comprised between 95/5 and 60/40 for ceramic materials, and between 90/10 and 10/90 for carbonaceous materials, and where the starting base material and the phenolic resin have a particle size preferably less than 100 µm.

In a first stage i), the homogeneous mixture of the starting base material of ceramic or carbonaceous nature and the resin is prepared. This mixture can be performed in a simple drum mixer, a ball mill or a laboratory kneader, advantageously without solvents (dry method).

In stage ii), the sintering of said homogeneous mixture is carried out in a selective laser sintering machine until forming a part or preform called "green body" with the desired geometry. The selective laser sintering machine is of general knowledge by a person skilled in the art and, therefore, the selection of one type or another of selective laser sintering machine does not modify the procedure according to the present invention. Among the selective laser sintering machines of the state of the art we can cite as examples models EOSINT P 800, FORMIGA P 110 from the manufacturer EOS, or models sPro™ 60 SD, sPro™ 60 HD, sPro™ 230 from the manufacturer 3Dsystems.

In stage iii), after the material sintering, a curing treatment is carried out at a low temperature to cure the phenolic resin so that the green body hardens and gains mechanical resistance. The curing treatment is performed at a temperature comprised between 150 and 300ºC, preferably between 150 and 200ºC, also preferably with a minimum time of 2 hours. The curing of the green body avoids the deformation thereof by the outlet of volatile compounds during the later thermal treatment.

In stage iv), a pyrolysis treatment is carried out of said cured green body in an inert atmosphere to decompose the resin. The pyrolysis is carried out by heating of said green body in an atmosphere of N₂, Argon, Helium or mixtures thereof until temperatures comprised between the 400-1,000ºC.

Said pyrolysis treatment is carried out with a slow heating rate, advantageously comprised between 1°C/min and 5°C/min to avoid the formation of cracks in the part due to the sudden exit from the interior of the material of said volatile compounds. The resulting part or brown body is a mixture of the ceramic or carbonaceous starting material and a carbon residue (amorphous) from the decomposition of the phenolic resin of sinterization. This carbon residue generally represents between 50 and 70% of the initial weight of the resin and it is considered an impurity that must be removed. Only in the case that the starting material is a material of carbonaceous nature, in particular of graphite origin, such as graphite, graphene or similar, the carbon residue generated would not be eliminated and thermal treatments could be performed in an inert atmosphere at a high temperature, preferably greater than 2,000ºC, with the aim of graphitizing said residue and that it forms part of the matrix of the graphite material. The optimum conditions of this graphitization process (temperature, time) are of general knowledge for a person skilled in the art.

With the aim of eliminating the carbon residue from the monolithic material, stage v) is carried out which consists of activating the brown body with a thermal treatment in a reactive atmosphere. Depending on the nature of the monolithic material, the temperature conditions and the type of reagent gas to be used would vary. Thus, for a carbonaceous starting base material, in this stage now a carbonaceous monolith, the following reagent gases and temperature ranges would be applied which are detailed below:

| **Reagent gas** | **Temperature (°C)** |
|---|---|
| O₂, air or mixtures of O₂ and an inert gas (N₂, Argon, Helium, etc.) | 250-450 |
| CO₂ | 700-1,200 |
| Steam | 900-1,200 |

For a ceramic starting base material, in this stage now a ceramic monolith, the following reagent gases and temperature ranges would be applied which are detailed below:

| **Reagent gas** | **Temperature (°C)** |
|---|---|
| O₂, air or mixtures of O₂ and an inert gas (N₂, Argon, Helium, etc.) | 450-900 |

In particular, the activation stage of ceramic monoliths in an atmosphere rich in O₂ is commonly known as "calcination". Additionally, and depending on the requirements of each case, when the monolith is based on a ceramic material several treatments can be performed in later stages, either to increase its density and improve its mechanical properties (stabilization) or to perform changes in the crystalline phases when it is used as catalyst support, for example, transforming boehmite in γ-alumina or anatase in rutile. The selection of the densification process conditions (also known as ceramic sintering) or transformation of crystalline phases are of general knowledge for a person skilled in the art. See, for example, J.Blanco et al "Characterization of alumina: sepiolite monoliths for use as industrial catalyst support" in Journal of Material Science, 29, 1994, 5927-5933 and C. Knapp et al in "Phase distribution in titania-sepiolite catalysts support prepared by different methods" in Journal of Materials Chemistry, 7(8), 1997, 1641-1645.

Advantageously, with the procedure according to the first aspect of the present invention ceramic or carbonaceous monolithic systems of great geometrical complexity, and not necessarily symmetrical with respect to an axis, can be obtained. Contrarily, in extrusion forming the monolithic system obtained is symmetrical with respect to an axis. Also advantageously, the processing cost is low due to the reduced number of additives used since the only additive necessary is the sintering agent and, additionally, it entails no risk for human health as it is not necessary to use solvents or acids at any stage. It should also be highlighted that the procedure according to the present invention is respectful with the nature of the starting material, it is fast and simple.

The invention also relates, in a second aspect, to the ceramic or carbonaceous monolithic systems thus obtained. It should be highlighted that, on the final monolithic materials obtained in accordance with the invention, it is possible to support materials of another nature which provide own functionality to the prepared monoliths. In one embodiment, the monoliths obtained will have the mere function of physical support, i.e. of substrate. Some examples where the monolith acts as physical support of material phases with own functionality are the supported metal catalysts and those materials with adsorbent properties such as molecular sieves, systems for elimination of effluent contaminants, etc..

Thus, the monoliths obtained in accordance with the procedure defined in the attached claims have application as a catalyst support in the pharmaceutical and petrochemical industry, as well as the automotive industry. By way of example, it should be highlighted that the three-way catalysts of the diesel vehicles are made from cordierite thanks to the fact that this ceramic has a low thermal expansion coefficient that makes it especially stable in the working conditions of a vehicle. On the other hand, the carbonaceous monolithic systems based on activated carbon, due to their high specific surface area, are especially useful as adsorbent systems for the elimination of contaminants in gas/liquid (filters) phase, or for the elimination of odours, etc. Finally, another of the generic applications where the monolithic systems fabricated according to the present invention can be used is in the filtering of particles thanks to the controlled size of its channels and those of the fluid distributors or diffusers (gases or liquids) in reactors to improve system homogeneity.

The invention shall be described below making reference to the following non-limitative examples of the present invention with the sole intention of showing a preferred embodiment of the object protected by the attached claims.

### Description of a preferred embodiment

### Examples

### Example 1. Production of monoliths of ceramic nature.

In this example the fabrication is proposed of ceramic monolithic systems based on Cordierite (Mg₂Al₄Si₅O₁₈) suitable for use as physical supports of metal catalysts.

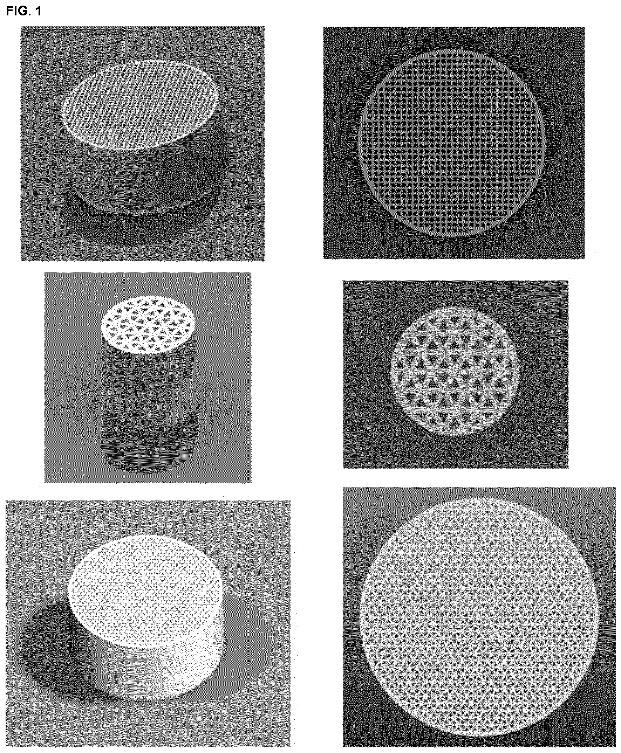

For the preparation of the cordierite we start with a mixture of ceramic materials precursors thereof: talc [Mg₃Si₄O₁₀(OH)₂] and mullite [Al₆Si₂O₁₃] in a molar ratio of 1:1. As sintering agent a phenolic resin from the family of the novolacs is selected (manufacturer "Georgia Pacific"). For the preparation of the cordierite monoliths we start from a ratio of sintering agent:ceramic material 30:70 by weight which means that to form approximately 10 kg of ceramic, 4.70 kg of talc plus 5.28 kg of mullite, 4.28 kg of sintering agent are necessary. Before the mixing of all the materials, both talc and mullite undergo a drying stage in an oven at 110ºC during 12 hours. Once the ceramic materials have been dried, they are homogeneously mixed with the sintering agent in the aforementioned proportions using a simple drum mixer during 20 minutes. Once the homogeneous mixing of all the materials is achieved, the sintering machine is loaded to perform the fabrication of the "green bodies". The material sintering is performed in a "DTM Sinterstation 2500 Ci" machine with 50W CO₂ laser. The 3D designs which appear in figure 1 are used for the preparation of the ceramic green bodies. The machine parameters used for fabrication the graphite monoliths are detailed below:

| | |
|---|---|
| CO₂ laser power used | 15 W |
| Laser scan rate | 5080 mm/s |
| Laser scan spacing | 0.16 |
| Layer thickness | 0.08 |
| Atmosphere used in the chamber | N₂ |
| Material bed temperature | 58ºC |
| Feeder temperature | 45ºC |

Once the material sintering process has concluded, the green bodies are removed from the sintering machine and they are subjected to a cleaning process wherein the non-sintered material powder is eliminated from the cavities of the green bodies. For the cleaning process, the green bodies are blown with air using a compressed air gun at a controlled pressure. Once the green bodies have been cleaned, they are introduced in an oven to cure them and achieve their hardening. The curing is carried out by heating the ceramic preforms at 170ºC for 2 hours and atmospheric pressure. Once the green bodies have been cured, they are subjected to a thermal treatment in an inert atmosphere of pure N₂ (99.999%) with the aim of decomposing the sintering agent from within the materials. The thermal treatment is formed by a heating in several stages which are carried out in isothermal mode (constant temperature) and non-isothermal mode (under a temperature increase). The flow rate of N₂ used to perform the pyrolysis is approximately 50 ml/min for each gram of material of green body to be pyrolyzed. The heating stages that make up the pyrolysis of the ceramic green bodies are shown below:

| Stage | Heating rate / heating time | Temperature range /Temperature heating |
|---|---|---|
| Stage 1 (non-isothermal) | 2ºC/min | T_{ambient}-100ºC |
| Stage 2 (isothermal) | 30 min | 100ºC |
| Stage 3 (non-isothermal) | 2ºC/min | 100-350ºC |
| Stage 4 (isothermal) | 1.5 h | 350ºC |
| Stage 5 (non-isothermal) | 2ºC/min | 350-550ºC |
| Stage 6 (isothermal) | 2 h | 550ºC |
| Stage 7 (non-isothermal) | 2ºC/min | 900ºC |

Once the pyrolysis stage of the green bodies has concluded, the activation stage of the brown bodies obtained is performed with the aim of achieving the pure ceramic monoliths. Therefore, the brown bodies are subjected to heating in an O₂ atmosphere (calcination). The flow rate of oxygen used in the calcination stage is 40 ml/min for each gram of ceramic monolith. On the other hand, and since the ceramic starting material is a cordierite precursor, an additional sintering stage is carried out of the cordierite at high temperature which allows the transformation of crystalline phases (cordierization). The cordierite synthesis stage is performed after the calcination stage and in the same oxygen atmosphere. The calcination and cordierization processes of the ceramic monoliths are made up of different stages (isothermal and non-isothermal) and the conditions used are those cited below:

| Stage | Heating rate / heating time | Temperature range / Temperature heating |
|---|---|---|
| Calcination | | |
| Stage 1 (non-isothermal) | 2ºC/min | Tᵣₒₒₘ-500ºC |
| Stage 2 (isothermal) | 3 h | 500ºC |

| Cordierization | | |
|---|---|---|
| Stage 3 (non-isothermal) | 2ºC/min | 500-1400ºC |
| Stage 4 (isothermal) | 5 h | 1400ºC |

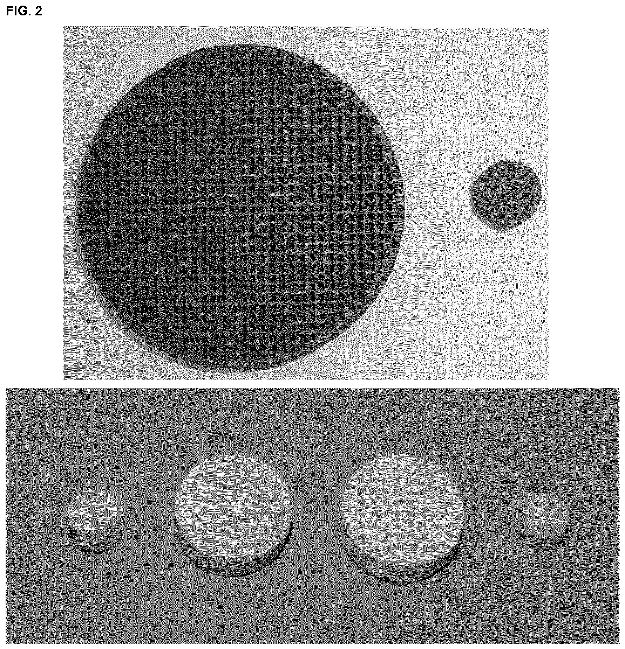

The ceramic monoliths obtained after the calcination and cordierization processes have a good mechanical resistance, high density, high purity and have no fissures (see figure 2).

### Example 2. Production of monoliths of carbonaceous nature.

In this example the fabrication is proposed of carbonaceous monolithic systems based on graphite with different geometries. For the preparation of the graphite monoliths we start from a synthetic graphite powder (company TIMCAL), which has an average particle size of 40 microns. As sintering agent the same phenolic resin is used as in example 1 (Georgia Pacific). The preparation of the graphite monoliths is carried out by mixing the sintering agent and the graphite powder in a 50:50 ratio by weight which means that to prepare 7 kg of graphite monoliths approximately 5 kg of phenolic resin and 5 kg of graphite are necessary. Before mixing the materials, the graphite is subjected to a drying stage in an oven at 110ºC during 5 hours.

Once the graphite has been dried, it is homogeneously mixed with the sintering agent in the aforementioned proportions using a simple drum mixer during 20 minutes. Once the homogeneous mixing of all the materials is achieved, the sintering machine is loaded to perform the fabrication of the "green bodies". The material sintering is performed based on the same 3D designs and in the same sintering machine as example 1. The machine parameters used for fabrication the ceramic monoliths are detailed below:

| | |
|---|---|
| CO₂ laser power used | 10 W |
| Laser scan rate | 5080 mm/s |
| Laser scan spacing | 0.13 mm |
| Layer thickness | 0.10 mm |
| Atmosphere used in the chamber | N₂ |
| Material bed temperature | 55ºC |
| Feeder temperature | 54ºC |

Once the material sintering process has concluded, the green bodies are removed from the sintering machine and they are subjected to a cleaning process wherein the non-sintered material dust is eliminated from the cavities of the green bodies. The cleaning methodology used is the same as that followed in example 1. Once the green bodies have been cleaned, they are introduced in an oven to cure them and achieve their hardening. The curing, as in example 1, is carried out by hardening the preforms at 170ºC during 2 hours and atmospheric pressure. Once the green bodies have been cured, they are subjected to a thermal treatment in an inert atmosphere of pure N₂ (99.999%) with the aim of decomposing the sintering agent from within the materials. The conditions followed for the pyrolysis of the green bodies (number of stages, temperature, time, gas flow rates) are the same as those used for the ceramic green bodies of example 1. Once the brown bodies have been obtained, a final stage is performed wherein the carbonaceous residue is graphitized by the decomposition of the sintering agent. The graphitization stage of the brown bodies consists of heating to 2000ºC during 5 hours in an atmosphere of pure N₂. The graphite monoliths obtained after the graphitization process show a good mechanical resistance, good geometrical definition and great purity (figure 2).

## Claims

1. Indirect Selective Laser Sintering procedure for the fabrication of monolithic systems of carbonaceous or ceramic nature, **characterized in that** it comprises the following stages:
i) preparing a dry homogeneous mixture of a starting base material selected from a ceramic or carbonaceous material with a phenol-formaldehyde resin selected from the group consisting of a novolac resin or a resol resin, where the ratio between said starting base material and said resin is comprised between 95/5 - 60/40 for a ceramic material and between 90/10 - 10/90 for a carbonaceous material;
ii) in a selective laser sintering machine, sintering said homogeneous mixture until forming a part or preform called "green body" with the desired geometry;
iii) next, removing the part, preform or "green body" from the sintering machine, cleaning it and performing a curing treatment at a temperature comprised between 150 and 300°C, so that a cured part, cured preform or cured green body is obtained;
iv) performing a pyrolysis treatment of said cured green body in an inert atmosphere at a temperature comprised between 400 and 1,000°C to decompose the resin and provide a treated part or "brown body" which has a carbon residue derived from the pyrolysis of the resin, said pyrolysis treatment comprising alternate stages of isothermal heating and of non-isothermal heating; and
v) finally, activating the brown body with a thermal treatment in a reactive atmosphere to eliminate said carbon residue derived from the pyrolysis and provide the ceramic or carbonaceous monolith, where the conditions of reactive atmosphere and temperature are selected depending on the ceramic or carbonaceous starting base material as follows:
- for a ceramic starting base material:
| **Reagent gas** | **Temperature (°C)** |
|---|---|
| O₂, air or mixtures of O₂ and an inert gas | 450-900 |
- for a carbonaceous starting base material:
| Reagent gas | Temperature **(°C)** |
|---|---|
| O₂, air or mixtures of O₂ and an inert gas | 250-450 |
| CO₂ | 700-1,200 |
| Steam | 900-1,200 |
and, optionally, in the case that said starting material is ceramic,
vi) thermally treating said ceramic monolith in a reactive atmosphere of oxygen, air or mixtures of oxygen and an inert gas at a temperature greater than 900ºC so that a densification or a transformation of crystalline phases takes place.

2. Procedure according to claim 1, where said ceramic or carbonaceous starting base material and said resin have a particle size less than 100 µm.

3. Procedure according to claim 1, where said carbonaceous material is a material with a majority carbon content, greater than 90%, which is selected from activated carbon, carbon black, graphite, graphene, carbon nanotubes, carbon nanofibres.

4. Procedure according to claim 1, where said ceramic material is a metal oxide, clay or other inorganic compound such as an aluminosilicate, carbonate, sulfate, bicarbonate or mixtures of the same.

5. Procedure according to claim 1, where said inert gas or atmosphere is selected from N₂, Argon, Helium or mixtures thereof.

6. Procedure according to claim 1, where, in said stage i), at least 95% by weight of the resin has a particle size less than 75 µm.

7. Procedure according to claim 1, where, in stage iii), a curing treatment is carried out during a minimum time of 2 hours.

8. Procedure according to claim 1, where said non-isothermal heating has a temperature ramp comprised between 1°C/min and 5°C/min.

9. Procedure according to claim 1, wherein the monolithic system has a geometry not necessarily symmetric with respect to an axis.

## Patentansprüche

1. Indirektes-Selektives-Lasersintern-Verfahren zur Herstellung monolithischer Systeme von kohlenstoffhaltiger oder keramischer Natur, **dadurch gekennzeichnet, dass** dasselbe die folgenden Schritte aufweist:
i) Vorbereiten eines trockenen homogenen Gemisches eines Ausgangsmaterials, das ausgewählt ist aus einem keramischen oder kohlenstoffhaltigen Material mit einem Phenol-Formaldehyd-Harz, das ausgewählt ist aus der Gruppe, die aus einem Novolak-Harz oder einem Resol-Harz besteht, wobei das Verhältnis zwischen dem Ausgangsmaterial und dem Harz bei einem keramischen Material zwischen 95/5 - 60/40 und bei einem kohlenstoffhaltigen Material zwischen 90/10 - 10/90 liegt;
ii) Sintern des homogenen Gemisches in einer Selektives-Lasersintern-Maschine bis zum Bilden eines Teils oder einer Vorform, die "Grünkörper" genannt werden, mit der gewünschten Geometrie;
iii) danach Entfernen des Teils, der Vorform oder des "Grünkörpers" aus der Sintermaschine, Reinigen desselben beziehungsweise derselben und Durchführen einer Härtungsbehandlung bei einer Temperatur zwischen 150 und 300°C, so dass ein gehärtetes Teil, eine gehärtete Vorform oder ein gehärteter Grünkörper erhalten wird;
iv) Durchführen einer Pyrolysebehandlung des gehärteten Grünkörpers in einer inerten Atmosphäre bei einer Temperatur zwischen 400 und 1000°C, um das Harz zu zersetzen und ein behandeltes Teil oder einen "Braunkörper" bereitzustellen, das beziehungsweise der einen von der Pyrolyse des Harzes abgeleiteten Kohlenstoffrest aufweist, wobei die Pyrolysebehandlung abwechselnde Schritte einer isothermen Erwärmung und einer nicht-isothermen Erwärmung aufweist; und
v) schließlich Aktivieren des Braunkörpers mit einer thermischen Behandlung in einer reaktiven Atmosphäre, um den von der Pyrolyse abgeleiteten Kohlenstoffrest zu entfernen und den keramischen oder kohlenstoffhaltigen Monolith bereitzustellen, wobei die Bedingungen hinsichtlich reaktiver Atmosphäre und Temperatur abhängig von dem keramischen oder kohlenstoffhaltigen Ausgangsmaterial wie folgt ausgewählt werden:
- für ein keramisches Ausgangsmaterial:
| **Reaktionsgas** | **Temperatur (°C)** |
|---|---|
| O₂, Luft oder Gemische aus O₂ und einem inerten Gas | 450 - 900 |
- für ein kohlenstoffhaltiges Ausgangsmaterial:
| Reaktionsgas | **Temperatur (°C)** |
|---|---|
| O₂, Luft oder Gemische aus O₂ und einem inerten Gas | 250 - 450 |
| CO₂ | 700 - 1200 |
| Dampf | 900 - 12000 |
und optional in dem Fall, in dem das Ausgangsmaterial keramisch ist,
vi) thermisches Behandeln des keramischen Monoliths in einer reaktiven Atmosphäre aus Sauerstoff, Luft oder Gemischen aus Sauerstoff und einem inerten Gas bei einer Temperatur, die höher als 900°C ist, so dass eine Verdichtung oder eine Umwandlung von kristallinen Phasen stattfindet.

2. Verfahren gemäß Anspruch 1, bei dem das keramische oder kohlenstoffhaltige Ausgangsmaterial und das Harz eine Partikelgröße von weniger als 100 µm aufweisen.

3. Verfahren gemäß Anspruch 1, bei dem das kohlenstoffhaltige Material ein Material mit einem mehrheitlichen Kohlenstoffgehalt von mehr als 90 % ist, das ausgewählt ist aus Aktivkohle, Kohleschwarz, Graphit, Graphen, Kohlenstoff-Nanoröhren, Kohlenstoff-Nanofasern.

4. Verfahren gemäß Anspruch 1, bei dem das keramische Material ein Metalloxid, Ton oder eine andere anorganische Verbindung ist, wie zum Beispiel ein Aluminosilikat, Carbonat, Sulfat, Bicarbonat oder Gemische derselben.

5. Verfahren gemäß Anspruch 1, bei dem das inerte Gas oder die inerte Atmosphäre ausgewählt ist aus N₂, Argon, Helium oder Gemischen derselben.

6. Verfahren gemäß Anspruch 1, bei dem bei Schritt i) zumindest 95 Gew.-% des Harzes eine Partikelgröße von weniger als 75 µm aufweisen.

7. Verfahren gemäß Anspruch 1, bei dem bei Schritt iii) eine Härtungsbehandlung während einer Mindestzeit von 2 Stunden durchgeführt wird.

8. Verfahren gemäß Anspruch 1, bei dem das nicht-isotherme Erwärmen einen Temperaturanstieg zwischen 1°C/min und 5°C/min aufweist.

9. Verfahren gemäß Anspruch 1, bei dem das monolithische System eine Geometrie aufweist, die in Bezug auf eine Achse nicht notwendigerweise symmetrisch ist.

## Revendications

1. Procédé de Frittage Laser Sélectif Indirect pour la fabrication de systèmes monolithiques de nature carbonée ou céramique, **caractérisé en ce qu'**il comprend les étapes suivantes :
i) préparation d'une mixture sèche homogène d'un matériau de base de départ sélectionné dans un matériau céramique ou carboné avec une résine phénol-formaldéhyde sélectionnée dans le groupe constitué de résine novolac ou de résine résol, dans laquelle le rapport entre ledit matériau de base de départ et ladite résine est compris entre 95/5 - 60/40 pour un matériau céramique et entre 90/10 - 10/90 pour un matériau carboné ;
ii) dans une machine de frittage laser sélectif, frittage de ladite mixture homogène jusqu'à formation d'une pièce ou d'une préforme appelée « pièce verte» selon la géométrie désirée ;
iii) ensuite, retrait de la pièce, préforme ou «pièce verte» de la machine à frittage, nettoyage de celle-ci et réalisation d'un traitement de durcissement à une température comprise entre 150 et 300°C, afin qu'une pièce durcie, préforme durcie ou pièce verte durci soit obtenu ;
iv) réalisation d'un traitement de pyrolyse dudit pièce verte durci dans une atmosphère inerte à une température comprise entre 400 et 1 000°C pour décomposer la résine et fournir une pièce traitée ou «pièce brune» comportant un résidu de carbone dérivé de la pyrolyse de la résine, ledit traitement par pyrolyse comprenant des étapes alternatives de chauffage isotherme et de chauffage non-isotherme ; et
v) finalement, activation du pièce brune par un traitement thermique dans une atmosphère réactive afin d'éliminer ledit résidu de carbone dérivé de la pyrolyse et de fournir le monolithe céramique ou carboné, dans lequel les conditions d'atmosphère réactive et de température sont sélectionnées selon le matériau de base de départ céramique ou carboné comme suit :
- pour un matériau de base de départ céramique :
| **Gaz réactif** | **Température (°C)** |
|---|---|
| O₂, air ou mélanges d'O₂ et d'un gaz inerte | 450-900 |
- pour un matériau de base de départ carboné :
| **Gaz réactif** | **Température (°C)** |
|---|---|
| O₂, air ou mélanges d'O₂ et d'un gaz inerte | 250-450 |
| CO₂ | 700-1 200 |
| Vapeur | 900-1 200 |
et, optionnellement, dans le cas où ledit matériau de départ est de la céramique,
vi) traitement thermique dudit monolithe céramique dans une atmosphère réactive d'oxygène, d'air ou de mélanges d'oxygène et d'un gaz inerte à une température supérieure à 900°C afin que se produise une densification ou une transformation des phases cristallines.

2. Procédé selon la revendication 1, dans lequel ledit matériau de base de départ céramique ou carboné et ladite résine ont une taille de particule inférieure à 100 µm.

3. Procédé selon la revendication 1, dans lequel ledit matériau carboné est un matériau contenant une majorité de carbone, supérieure à 90%, sélectionné parmi du carbone activé, du noir de carbone, du graphite, du graphène, des nanotubes de carbone, des nanofibres de carbone.

4. Procédé selon la revendication 1, dans lequel ledit matériau céramique est un oxyde de métal, de l'argile ou un autre composé inorganique tel qu'un aluminosilicate, un carbonate, un sulfate, un bicarbonate ou des mélanges similaires.

5. Procédé selon la revendication 1, dans lequel ledit gaz inerte ou ladite atmosphère est sélectionné(e) parmi le N₂, l'Argon, l'Helium ou des mélanges de ceux-ci.

6. Procédé selon la revendication 1, dans lequel à ladite étape i), au moins 95% en poids de la résine possède une taille de particule inférieure à 75 µm.

7. Procédé selon la revendication 1, dans lequel à ladite étape iii), un traitement de durcissement est réalisé pendant une durée minimum de 2 heures.

8. Procédé selon la revendication 1, dans lequel ledit chauffage non-isotherme possède une progression de température comprise entre 1°C/min et 5°C/min.

9. Procédé selon la revendication 1, dans lequel le système monolithique a une géométrie non nécessairement symétrique par rapport à un axe.
